# FASCICULE DE BREVET EUROPEEN

(11) **EP 0 896 676 B1**
(45) Date de publication et mention de la délivrance du brevet: **28.08.2002**
(21) Numéro de dépôt: 97921915.1
(22) Date de dépôt: 30.04.1997
(51) Int. Cl.: G01V 1/30

(54) **PROCEDE DE CARTOGRAPHIE DES ZONES FORABLES DANS UN CHAMP PETROLIER SANS RISQUE DE RENCONTRER DES ZONES ANOMALIQUES**
VERFAHREN ZUR KARTIERUNG VON BOHRBAREN BEREICHEN EINES ÖLFELDES OHNE GEFAHR DER BEGEGNUNG VON ABNORMALEN BEREICHEN
METHOD FOR CHARTING DRILLABLE ZONES IN AN OILFIELD AVOIDING ANOMALY ZONES

(30) Priorité: 30.04.1996 FR 9605437
(43) Date de publication de la demande: 17.02.1999
(73) Titulaire: TOTAL, 92800 Puteaux (FR); ELF AQUITAINE PRODUCTION, 92078 Paris la Défense (FR)
(72) Inventeur: DES VALLIERES, Thierry, F-92100 Boulogne (FR); KUHN, Helmut, F-64290 Aubertin (FR); PARRON, Didier, F-64680 Buziet (FR); LAFET, Yves, F-75015 Paris (FR)
(74) Mandataire: Jolly, Jean-Pierre
(86) Numéro de dépôt international: FR9700774
(87) Numéro de publication internationale: WO97041455

(56) Documents cités:
- EP-A- 0 562 687
- US-A- 5 148 494
- US-A- 5 153 858

## Description

La présente invention concerne un procédé de cartographie des zones forables dans un champ pétrolier terrestre ou marin, sans risque de rencontrer des zones anomaliques, telles que des gaz de surface.

On sait que les gaz de surface se trouvent entre la surface du sol et une profondeur à laquelle le puits de forage n'a pas encore été équipé d'appareils permettant de bloquer une éventuelle arrivée de gaz. Ces gaz constituent un danger potentiel très sérieux lors d'un forage pétrolier et il convient d'évaluer leur emplacement et leur importance avant d'implanter un puits de forage.

Jusqu'à présent, la détection des gaz de surface était effectuée en faisant appel au procédé d'exploration sismique réflexion dit à deux dimensions (2D). Ce procédé consiste à collecter des traces sismiques résultant de la réflexion d'ondes acoustiques par le sous-sol en opérant à l'aide d'un dispositif d'acquisition,qui comprend au moins une source émettrice d'ondes acoustiques et une ligne de récepteurs acoustiques et que l'on déplace à la surface du sol (sismique terrestre) ou à la surface de la mer (sismique marine).

En particulier, en exploration sismique marine 2D, le matériel d'acquisition des données comprend un bateau muni d'une source émettrice d'impulsions acoustiques et qui remorque une ligne ou streamer sur laquelle sont montés une pluralité de capteurs équidistants destinés à recevoir les ondes acoustiques réfléchies par les différentes couches du sous-sol et à délivrer chacun un signal représentant l'amplitude des ondes reçues en fonction du temps, lequel signal est enregistré pour fournir un enregistrement appelé trace sismique. La longueur du streamer peut varier de 500 mètres environ à 6 000 mètres environ et les capteurs montés sur le streamer sont espacés de quelques mètres à plusieurs dizaines de mètres, par exemple de 12,5 mètres à 50 mètres environ. La zone marine à étudier dans le procédé d'exploration sismique 2D peut s'étendre sur plusieurs centaines de kilomètres carrés et peut avoir, par exemple une surface de 200 km x 200 km. Le bateau parcourt cette zone selon des trajets rectilignes parallèles, distants de plusieurs kilomètres, par exemple de 5 à 6 km. Au cours de son mouvement, la source sismique émet des impulsions à des intervalles de temps réguliers, par exemple toutes les 5 secondes. Pour chaque trajet rectiligne du bateau, on obtient, après traitement des enregistrements sismiques, une section sismique 2D constituée par une pluralité de traces verticales. Cette section représente la coupe verticale du sous-sol dans un système de coordonnées X (direction de déplacement du bateau) et T (profondeur exprimée en temps).

Dans le cas de sables peu profonds saturés en gaz, l'énergie sismique réfléchie peut prendre des valeurs importantes qui se traduisent sur la section sismique enregistrée par des pics de fortes amplitudes (points brillants).

Pour reconstituer l'image du sous-sol de la zone étudiée, il faut mettre côte à côte les différentes sections sismiques enregistrées et imaginer des interpolations entre les points brillants desdites sections. Toutefois, ces interpolations sont des opérations longues et qui comportent une part de subjectivité. Il n'est pas rare en effet que deux interprétateurs effectuent les interpolations de manières différentes et aboutissent ainsi à des cartes de risques différentes.

On connaît également le procédé d'acquisition sismique en trois dimensions (3D). Ce procédé met en oeuvre un dispositif d'acquisition, qui comprend au moins une source émettrice d'ondes acoustiques et une pluralité de lignes de capteurs acoustiques et que l'on déplace à la surface du sol (acquisition sismique terrestre 3D) ou à la surface de la mer (acquisition sismique marine 3D). Dans la mise en oeuvre de ce procédé en acquisition sismique marine, un bateau muni d'au moins une source émettrice d'ondes acoustiques remorque plusieurs lignes ou streamers disposées parallèlement, dont le nombre peut aller jusqu'à huit, chaque ligne étant munie d'une pluralité de capteurs d'ondes acoustiques. Les lignes sont plus courtes que dans le procédé d'acquisition sismique 2D, sont séparées l'une de l'autre d'une distance, par exemple d'environ 50 m et portent des capteurs équidistants, par exemple tous les 25 m. La largeur de la zone balayée par le bateau augmente avec le nombre de lignes de capteurs et elle est, par exemple, de l'ordre de 400 m dans le cas de figure ci-dessus.

A chaque trace enregistrée, on associe une position spatiale définie à partir des coordonnées de la source émettrice et du capteur associés au moment du tir pour générer cette trace.

A partir des traces sismiques enregistrées durant l'acquisition sismique 3D, on réalise une image du sous-sol en trois dimensions dans un système d'axes (X, Y, T) sous la forme dite "cube sismique 3D" (section sismique 3D). Pour cela, on attribue à chaque carreau (bin) d'un ensemble de carreaux formant un quadrillage spatial régulier dans un plan (X, Y) représentatif du plan d'acquisition des traces sismiques, une trace centrale élaborée à partir des traces enregistrées en faisant appel à la technique bien connue de la couverture multiple et ayant des positions spatiales situées à l'intérieur du carreau considéré, cette trace centrale étant affectée au centre dudit carreau suivant l'axe temporel T. Le bloc sismique est échantillonné en cellules élémentaires parallélépipédiques fictives centrées chacune sur un bin et de dimensions suivant X et Y correspondant à celles dudit bin et d'épaisseur selon T correspondant à la longueur de l'échantillon temps choisi pour échantillonner la trace sismique centrale, chaque cellule renfermant un échantillon de trace sismique.

On obtient ainsi un échantillonnage continu du sous-sol. Une cellule quelconque Cᵢⱼₖ du bloc sismique échantillonné est donc parfaitement définie par les coordonnées (Xᵢ, Yⱼ, Tₖ) de son centre, c'est-à-dire de l'échantillon de trace sismique centrale qu'elle renferme, Xᵢ et Yⱼ étant les coordonnées du bin Bᵢⱼ associé à la cellule et Tₖ étant la coordonnée temporelle de l'échantillon k de la trace sismique centrale TRᵢⱼ du bin Bᵢⱼ, et par l'amplitude Aᵢⱼₖ dudit échantillon. Les bins quadrillant le plan (X, Y) du bloc sismique 3D sont avantageusement rectangulaires et correspondent à des rectangles sur le terrain ayant, par exemple, une longueur de 50 m (distance entre les lignes) et une largeur de 25 m (distance entre deux capteurs successifs sur la ligne).

L'information utile recueillie au cours d'un tir est concentrée à l'intérieur d'un volume conique centré sur la position spatiale de l'enregistrement (trace). Les volumes coniques correspondant à deux tirs successifs émis pendant le déplacement du bateau ne se recouvrent pas ou ne se recouvrent que partiellement pour les couches de surface du sous-sol. De ce fait, le procédé d'acquisition sismique 3D avec les paramètres utilisés pour l'exploration pétrolière, dont l'objectif est la reconnaissance en profondeur, ne sont pas favorables par la mise en évidence d'objets en surface et notamment des gaz de surface.

Par le brevet EP-A-0 562 687 on connaît un procédé de localisation de réserves d'hydrocarbures faisant appel à une interprétation structurale de données. Dans ce procédé, à partir d'hypothèses sur la présence d'hydrocarbures dans une région d'intérêt du sous-sol :
(i) on sélectionne des zones ayant une probabilité de renfermer des réserves d'hydrocarbures qui est supérieure à une probabilité prédéterminée,
(ii) on définit, à partir de données structurales de la région d'intérêt, une fermeture structurale pour chacune desdites zones sélectionnées, chaque fermeture structurale comprenant une surface capable d'enfermer une réserve d'hydrocarbures et ayant un périmètre de profondeur constante substantiellement égale au point le plus profond de la zone,
(iii) on détermine une mesure de la similitude géométrique entre chaque zone et la fermeture structurale associée, et
(iv) on sélectionne chacune des zones pour lesquelles ladite mesure excède une valeur prédéterminée.

On connaît également par le brevet US-A-5 153 858, qui représente l'état de la technique le plus proche, un procédé de pointé automatique d'horizons dans un bloc 3D de traces sismiques échantillonnées en profondeur. Dans ce procédé, on convertit chaque trace sismique du bloc 3D en une trace binaire formée d'une séquence de valeurs "1" et de valeurs "0", en affectant la valeur "1" à chaque échantillon de la trace sismique pour lequel un horizon existe à la profondeur définie par cet échantillon, et la valeur "0" à chaque échantillon ne répondant pas à cette condition. On transforme ainsi le bloc 3D de traces sismiques en un bloc 3D correspondant de traces binaires, qui est stocké dans la mémoire d'un ordinateur et qui est utilisé pour la recherche automatique d'horizons. Pour ce faire, on choisit un échantillon "1" d'une trace binaire du bloc 3D de traces binaires, qui est situé sur l'horizon à pointer, et on effectue un balayage automatique du bloc 3D binaire pour trouver, en opérant de proche en proche sur les traces binaires adjacentes, tous les échantillons de valeur "1" correspondant à l'échantillon "1" de départ. A partir des profondeurs associées aux échantillons sélectionnés, on crée une représentation de l'horizon recherché.

Les inventeurs de la présente invention ont trouvé que l'on pouvait utiliser le procédé d'acquisition sismique 3D pour réaliser une cartographie des zones de surface de sous-sol avec une haute résolution spatiale.

L'idée de base qui est à l'origine de l'invention est que les gaz de surface constituent des événements de fortes amplitudes que l'on peut caractériser aisément.

La présente invention a pour objet un procédé de cartographie selon la partie caractérisante de la revendication 1.

A la limite une zone anomalique peut être constituée d'une seule cellule élémentaire.

Toutes les opérations du procédé, qui concernent les traitements du bloc sismique, pour aboutir aux cartes des zones anomaliques, sont effectuées automatiquement par un programme d'ordinateur à l'exception du choix du seuil qui est laissé à l'appréciation de l'opérateur.

Un avantage du procédé selon l'invention est que l'on peut utiliser les données d'acquisition 3D, dont le coût, lié à une durée moindre d'acquisition, est sensiblement inférieur au coût d'un procédé d'acquisition 2D orienté vers la détection des zones anomaliques.

Un autre avantage du procédé selon l'invention est qu'il est possible d'introduire la notion de fourchette d'erreur en déterminant plusieurs seuils. On peut établir des cartes de risques avec des hypothèses optimiste, pessimiste et intermédiaire.

Encore un autre avantage du procédé selon l'invention réside dans le fait qu'il n'est pas nécessaire de connaître la position spatiale de chaque trace avec une précision aussi grande que celle requise pour le traitement conventionnel (imagerie) des données sismiques 3D. Par exemple, en acquisition marine, la précision est suffisante si chaque ligne de capteurs est munie seulement d'une bouée de queue et de compas destinés à fournir des renseignements sur la déclinaison de la ligne par rapport à la direction de déplacement du bateau.

Selon l'invention, la trace centrale affectée au centre de chaque bin du plan (X, Y) du bloc sismique peut être notamment une trace somme, obtenue par sommation d'une collection de traces, par exemple en point milieu commun, produite à partir de traces sismiques enregistrées en couverture multiple, ou encore une trace migrée temps ou migrée profondeur résultant de l'application d'une technique conventionnelle de migration temps ou de migration profondeur aux traces sismiques sommes et/ou aux collections de traces sismiques.

Lorsque la trace centrale affectée au centre de chaque bin du bloc sismique 3D est une trace somme ou une trace migrée temps, l'axe P du système d'axes (X, Y, P) utilisé pour construire le bloc sismique est un axe temporel T. Lorsque ladite trace centrale est une trace migrée profondeur, ledit axe P est un axe profondeur Z.

L'invention sera décrite à présent en regard des dessins annexés dans lesquels :
la figure 1 représente schématiquement un système d'acquisition sismique 3D avec équipement complet ;
la figure 2 montre un bloc sismique 3D quadrillé en bins et échantillonné en cellules élémentaires dans un système d'axes (X, Y, T) ;
la figure 3 est une représentation de la projection en XY du bloc de cellules élémentaires sélectionnées et codées ;
la figure 4 montre la projection XT du bloc de cellules élémentaires sélectionnées et codées ;
la figure 5 montre la projection YT du bloc de cellules élémentaires sélectionnées et codées ;
la figure 6 est un histogramme montrant le nombre de cellules anomaliques pour chaque seuil d'énergie ; et
la figure 7 est une courbe donnant la surface couverte par les anomalies en fonction du seuil.

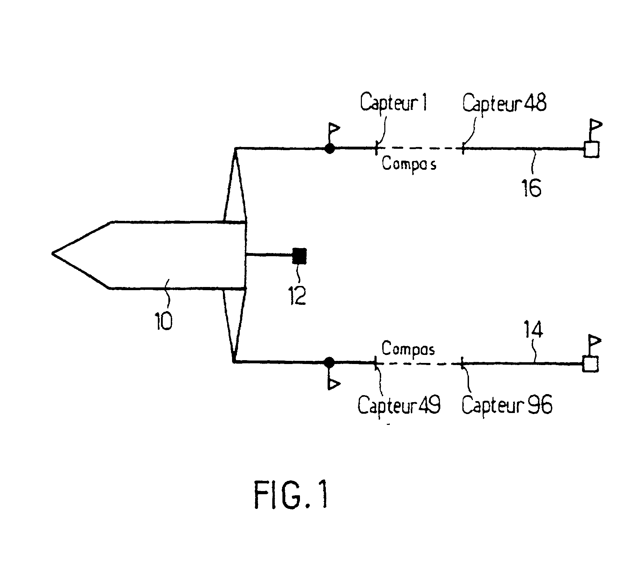

Avec référence à la figure 1, le système d'acquisition 3D comprend un bateau 10 qui remorque une source sismique 12 émettrice d'impulsions acoustiques et deux lignes 14,16 munies chacune de quarante huit capteurs.

Les lignes ont une longueur de 600 mètres chacune. Le premier capteur et le dernier capteur de chaque ligne sont munis de cibles pour permettre le repérage de leur position, par exemple par laser. Certains parmi les capteurs intermédiaires sont équipés de compas qui fournissent des renseignements sur la déclinaison de la ligne par rapport à la direction de déplacement du bateau.

On a appliqué le procédé selon l'invention pour les différentes géométries d'acquisition simulées suivantes :
1. longueur des lignes : on a testé des lignes ayant la moitié (300 m), le quart (150 m) et le huitième (75 m) de la ligne standard ainsi qu'une ligne munie d'un seul capteur. La distance du premier capteur au point de tir ou offset a été réduite par rapport à l'offset habituel et ramenée à environ 30 mètres. La puissance de la source sismique est réduite en conséquence ;
2. intervalle des points de tir : les points de tir sont espacés de 6, 25 m ou 12,5 m ;
3. espacement des lignes : dans le cas où plusieurs lignes sont utilisées, les lignes sont espacées de 25 m ou 50 m ;
4. dimension des bins : on a testé les dimensions suivantes : 6,25 x 12,5 m ; 6,25 x 25 m ; 12,5 x 25 m et 12,5 x 50 m.

Dans tous ces cas de figure, on a obtenu une carte des zones anomaliques satisfaisante répondant au problème posé.

L'acquisition qui serait faite avec une ligne unique de capteurs ayant une longueur réduite et munie d'un petit nombre de capteurs serait encore satisfaisante pour la construction du bloc sismique 3D. La ligne unique pourrait avoir une longueur de 150 mètres, de 75 mètres, voire même à l'extrême être constituée d'un seul capteur.

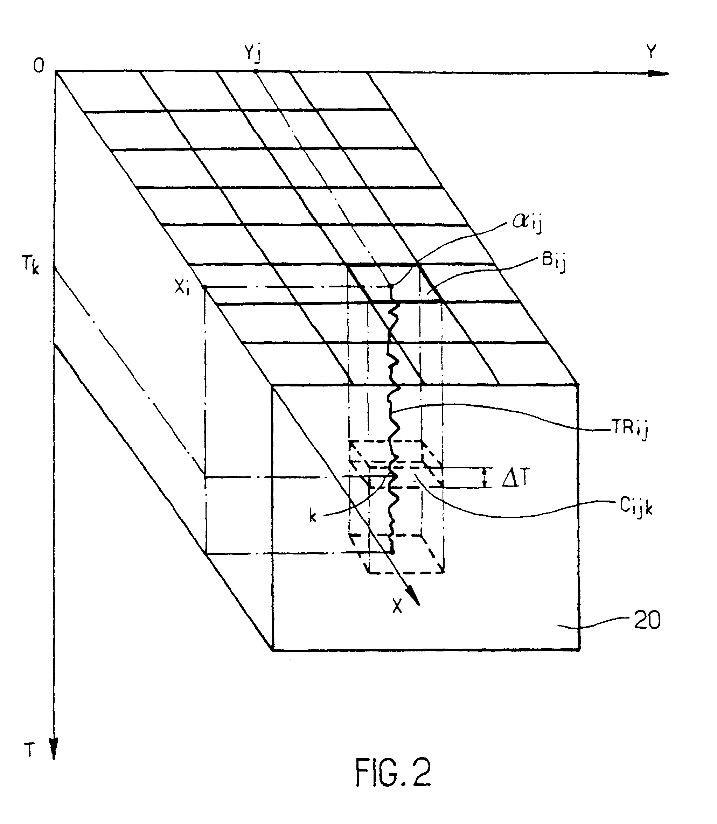

En se référant à la figure 2, à partir des traces sismiques enregistrées par le matériel d'acquisition, on constitue un bloc sismique 3D référencé 20, qui est une image tridimensionnelle de la zone explorée dans un système d'axes spatiotemporels orthonormé (X, Y, T) de sommet O, dans lequel X et Y sont les axes spatiaux et T est l'axe temporel. Tout d'abord, le plan défini par les axes X et Y, qui est choisi comme représentation du plan d'acquisition des traces sismiques, est quadrillé par un ensemble de carreaux formant un quadrillage régulier couvrant une surface dudit plan correspondant à la zone explorée. A chaque carreau (encore appelé bin) dudit ensemble, on attribue une trace centrale élaborée à partir des traces enregistrées qui ont des positions situées à l'intérieur du carreau considéré, cette trace centrale étant affectée au centre dudit carreau suivant l'axe temporel T. Ainsi au carreau Bᵢⱼ, on attribue la trace centrale TRᵢⱼ, cette trace étant affectée au centre αᵢⱼ, de coordonnées Xᵢ et Yⱼ, du carreau Bᵢⱼ selon l'axe temporel T.

Le bloc sismique 20 comportant une trace centrale associée à chaque bin est ensuite échantillonné en cellules élémentaires parallélépipédiques, chaque cellule étant centrée sur un bin du plan (X, Y) et ayant des dimensions suivant les axes X et Y correspondant respectivement à celles du bin sur lequel elle est centrée et une épaisseur ΔT selon l'axe T correspondant au pas d'échantillonnage suivant T de la trace centrale associée audit bin. Chaque cellule élémentaire renferme donc un échantillon d'une trace sismique centrale, ledit échantillon étant défini par ses coordonnées (X, Y, T) dans le bloc sismique, lesquelles coordonnées constituent les coordonnées de la cellule élémentaire contenant ledit échantillon. Ainsi, la cellule Cᵢⱼₖ, centrée sur le bin Bᵢⱼ, a des dimensions suivant les axes X et Y correspondant respectivement aux dimensions du bin Bᵢⱼ suivant les mêmes axes et une épaisseur ΔT correspondant au pas d'échantillonnage temporel de la trace TRᵢⱼ. Cette cellule renferme l'échantillon k de la trace sismique TRᵢⱼ, cet échantillon ayant les coordonnées (Xᵢ, Yⱼ, Tₖ) qui constituent les coordonnées de la cellule élémentaire Cᵢⱼₖ. Ainsi, chaque cellule du bloc sismique 20 est bien définie par les coordonnées (X, Y, T) de l'échantillon de trace sismique centrale qu'elle renferme et par l'amplitude dudit échantillon.

Pour chaque cellule élémentaire du bloc sismique 20, on calcule l'énergie de cette cellule à partir de l'amplitude de l'échantillon de trace sismique centrale qu'elle renferme, ladite énergie étant proportionnelle au carré de cette amplitude. On transforme ainsi le bloc sismique 20 en un bloc composé des mêmes cellules élémentaires, chacune maintenant définie par ses coordonnées (X, Y, T) comme dans le bloc 20 et par son énergie.

Après s'être fixé un seuil d'énergie au-delà duquel on considère que la présence de zones anomaliques est probable, on sélectionne les cellules du bloc énergie, qui ont une énergie égale ou supérieure audit seuil.

Les cellules ainsi sélectionnées sont ensuite affectées d'un code, de telle sorte que toutes les cellules appartenant à un même ensemble de cellules jointives sélectionnées aient le même code et que des cellules sélectionnées appartenant à des ensembles distincts de cellules jointives aient des codes différents, chaque ensemble de cellules sélectionnées jointives constituant une zone anomalique. Les codes ainsi affectés aux cellules sélectionnées peuvent être constitués par des couleurs, qui sont différentes d'une zone anomalique à l'autre. Pour le regroupement des cellules sélectionnées en ensembles de cellules jointives, on considère que deux cellules sont jointives si elles ont au moins une arête en commun.

A la limite, une zone anomalique peut être constituée d'une cellule élémentaire unique isolée.

Pour chacune des cellules retenues, on garde en mémoire sa position définie par ses coordonnées (X,Y,T) et son code.

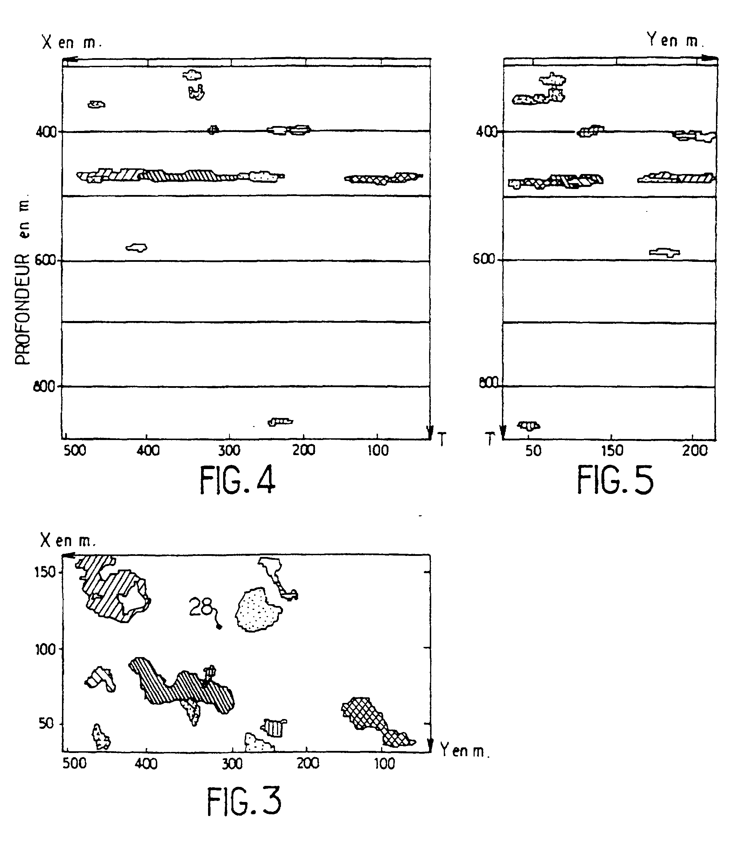

En effectuant une projection XY, ou vue d'en haut, du bloc des cellules affectées des codes, chaque zone anomalique ou point brillant apparaît sur cette projection avec un code différent, par exemple avec une couleur différente, ce qui donne une carte des zones anomaliques superposées comme représenté sur la figure 3. Sur cette figure, la position d'un puits est repérée par la référence 28. Dans cette position, le puits n'est pas situé dans une zone anomalique.

On peut également effectuer une projection XT ou une projection YT du bloc des cellules affectées des codes, de manière à faire apparaître l'épaisseur cumulée des zones anomaliques suivant l'axe des X comme représenté sur la figure 4 ou suivant l'axe des Y comme représenté sur la figure 5, pour déterminer les hauteurs auxquelles se trouvent les zones anomaliques.

Par association des trois projections, on peut délimiter les taches et les localiser à l'intérieur du bloc. Le seuil est choisi de la manière suivante :
a) à l'aide de mesures statistiques, on estime la plage des valeurs possibles que peut prendre le seuil.
b) à l'intérieur de cette plage, et en observant sur les données sismiques l'extension qu'ont les anomalies pour différents seuils, on choisit un seuil.

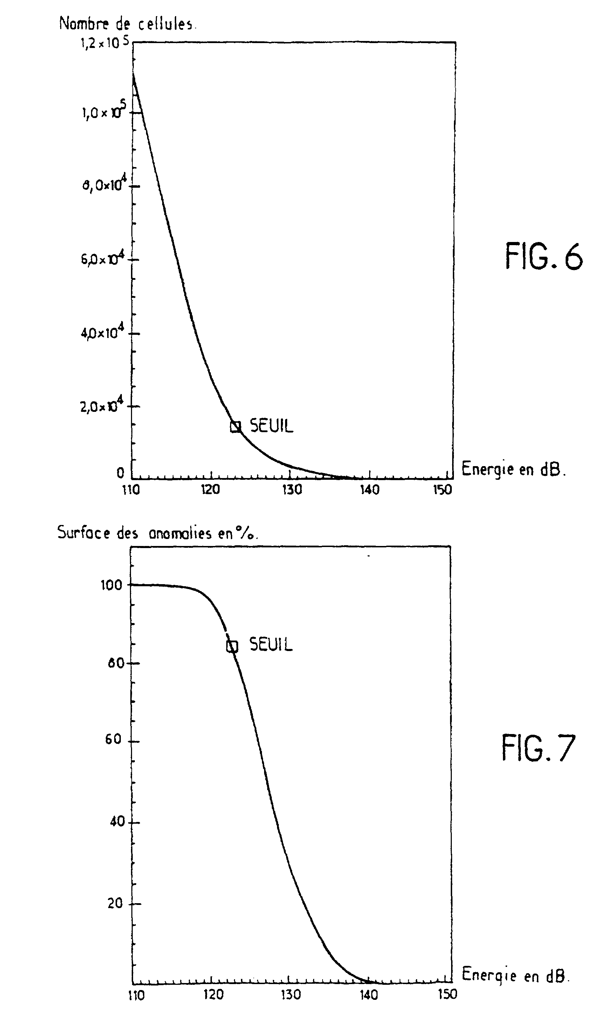

La figure 6 représente un exemple d'histogramme des différentes valeurs d'énergie exprimées en dB trouvées dans la totalité du bloc 3D, en fonction du nombre de cellules ayant ces énergies. Généralement, la valeur du seuil à retenir est située à une rupture de pente de la courbe. Dans l'exemple illustré, ce seuil est de l'ordre de 123 dB.

La figure 7 représente une courbe donnant la surface des anomalies en fonction du seuil.

Sur l'exemple de ces figures, on peut voir que pour des seuils inférieurs à 118 dB, les anomalies couvrent 100% de la surface du bloc 3D. Le seuil sélectionné, qui est de 123 dB correspond à 85% de la surface couverte. On peut considérer cela comme étant une hypothèse pessimiste

Selon l'invention, on peut faire varier le seuil d'énergie, pour la sélection des cellules, en fonction des degrés de risques que l'on se fixe pour réaliser la cartographie.

## Revendications

1. Procédé de cartographie des zones d'un champ pétrolier forables sans risque de rencontrer des zones anomaliques, ledit procédé étant du type consistant ;
- à effectuer, dans une zone à explorer du champ pétrolier, une acquisition d'enregistrements ou traces sismiques au moyen d'un matériel d'acquisition sismique réflexion ;
- à constituer, à partir desdites traces sismiques enregistrées, un bloc sismique 3D qui est une image tridimensionnelle de la zone explorée dans un système d'axes (X,Y,P), en attribuant à chaque carreau (Bᵢⱼ) d'un ensemble de carreaux formant un quadrillage spatial régulier dans le plan défini par les axes (X,Y) et choisi comme représentation du plan d'acquisition des traces sismiques, une trace centrale (TRᵢⱼ) élaborée à partir des traces enregistrées ayant des positions situées à l'intérieur du carreau considéré, cette trace centrale étant affectée au centre (αᵢⱼ) dudit carreau suivant l'axe P, et
- à échantillonner le bloc sismique 3D en cellules élémentaires, chaque cellule (Cᵢⱼₖ) étant centrée sur un carreau (Bᵢⱼ) du plan (X,Y) et ayant des dimensions suivant les axes X et Y correspondant respectivement à celles du carreau sur lequel elle est centrée et une épaisseur selon l'axe P correspondant à un pas d'échantillonnage suivant l'axe P de la trace centrale associée audit carreau, de telle sorte que chaque cellule élémentaire renferme un échantillon (k) d'une trace sismique centrale défini par ses coordonnées (X,Y,P) dans ledit bloc sismique, lesdites coordonnées constituant les coordonnées de la cellule élémentaire contenant l'échantillon,
et se caractérisant en ce qu'il consiste, en outre,
- à calculer pour chaque cellule élémentaire (Cᵢⱼₖ) du bloc sismique, l'énergie de cette cellule à partir de l'amplitude de l'échantillon de trace sismique qu'elle renferme, ladite énergie étant prooortionnelle au carré de cette amplitude,
- à fixer un seuil d'énergie au-delà duquel on considère que la présence de zones anomaliques est probable,
- à sélectionner les cellules du bloc qui ont des énergies égales ou supérieures audit seuil,
- à affecter les cellules sélectionnées d'un code, de telle sorte que toutes les cellules appartenant à un même ensemble de cellules sélectionnées jointives aient le même code et que des cellules sélectionnées appartenant à des ensembles distincts de cellules sélectionnées jointives aient des codes différents, chaque ensemble de cellules sélectionnées jointives constituant une zone anomalique,
- à mémoriser pour chacune des cellules retenues sa position (X,Y,P) et son code, et
- à effectuer une projection XY du bloc des cellules affectées des codes, chaque zone anomalique apparaissant sur cette projection avec un code différent, ce qui donne une carte des zones anomaliques superposées.

2. Procédé selon la revendication 1, **caractérisé en ce qu'**il consiste en outre à effectuer une projection XP ou une projection YP du bloc des cellules affectées des codes, de manière à faire apparaître l'épaisseur cumulée des zones anomaliques suivant l'axe des X ou suivant l'axe des Y, pour déterminer les hauteurs auxquelles se trouvent les zones anomaliques.

3. Procédé selon l'une des revendications 1 ou 2, **caractérisé en ce que** lesdits codes affectés aux cellules élémentaires sont constitués par des couleurs différentes attribuées à chaque zone anomalique.

4. Procédé selon l'une des revendications 1 à 3, **caractérisé en ce qu'**il consiste à varier le seuil d'énergie en fonction des degrés de risques que l'on se fixe pour réaliser la cartographie.

## Claims

1. Method for charting drillable zones in an oilfield avoiding anomaly zones, said method being of the type consisting in;
- acquiring, in a zone of the oilfield to be explored, seismic recordings or traces by means of seismic reflection acquisition equipment;
- constituting, from said recorded seismic traces, a 3D seismic block which is a three-dimensional image of the zone explored in a system of axes (X, Y, P), by attributing to each square (Bᵢⱼ) of an assembly of squares forming a regular spatial grid in the plane defined by the axes (X, Y) and selected as the representation of the acquisition plane of the seismic traces, a central trace (TRᵢⱼ) prepared from the recorded traces which have positions located inside the square being considered, this central trace being allocated to the centre (αᵢⱼ) of said square along the P axis, and
- sampling the 3D seismic block in elementary cells, each cell (Cᵢⱼₖ) being centred on a square (Bᵢⱼ) of the plane (X, Y) and having dimensions along the X and Y axes respectively corresponding to those of the square on which it is centred and a thickness on the P axis corresponding to a sampling step along the P axis of the central trace associated with said square, such that each elementary cell encloses a sample (k) of a central seismic trace defined by its coordinates (X, Y, P) in said seismic block, said coordinates constituting the coordinates of the elementary cell containing the sample, and **characterised in that** it furthermore consists in
- calculating, for each elementary cell (Cᵢⱼₖ) of the seismic block, the energy of this cell from the amplitude of the seismic trace sample which it encloses, said energy being proportional to the square of this amplitude,
- establishing an energy threshold beyond which it is considered that the presence of anomaly zones is probable,
- selecting the cells of the block having energies which are equal or superior to that of the threshold,
- allocating the selected cells a code, such that all the cells belonging to the same assembly of selected joined cells have the same code and that the selected cells belonging to distinct assemblies of selected joined cells have different codes, each selected joined assembly of cells constituting an anomaly zone,
- memorising the position (X, Y, P) and the code of each of the retained cells, and
- making a projection XY of the block of cells allocated codes, each anomaly zone appearing on this projection with a different code, thus providing a chart of the superimposed anomaly zones.

2. Method according to claim 1, **characterised in that** it also consists in making a projection XP or a projection YP of the block of cells allocated codes, so as to show the cumulative thickness of anomaly zones along the X axes or along the Y axes to determine the levels at which the anomaly zones are located.

3. Method according to either of claims 1 or 2, **characterised in that** said codes allocated to the elementary cells consist of different colours attributed to each anomaly zone.

4. Method according to any of claims 1 to 3, **characterised in that** it consists in varying the energy threshold as a function of the degrees of risk established for charting.

## Patentansprüche

1. Verfahren zum Kartographieren von bohrbaren Bereichen eines Ölfeldes ohne Gefahr der Begegnung von abnormalen Bereichen, wobei das Verfahren von dem Typ ist, der folgende Schritte umfaßt:
- Durchführen einer Erfassung von Aufzeichnungen oder seismischen Spuren in einem zu untersuchenden Bereich des Ölfeldes mittels eines seismischen Reflexionserfassungsgeräts,
- Erstellen eines seismischen 3D-Blocks ausgehend von den aufgezeichneten seismischen Spuren, der ein dreidimensionales Bild des untersuchten Bereichs in einem Achsensystem (X, Y, P) darstellt, wobei jedem Viereck (Bᵢⱼ) eines Ensembles von Vierecken, die in der durch die Achsen (X, Y) definierten Ebene ein regelmäßiges räumliches Raster bilden und als Darstellung der Erfassungsebene der seismischen Spuren ausgewählt sind, eine zentrale Spur (TRᵢⱼ) zugewiesen wird, die ausgehend von den aufgezeichneten Spuren, die im Inneren des betrachteten Vierecks liegende Positionen aufweisen, ausgearbeitet werden, und wobei diese zentrale Spur dem Zentrum (αᵢⱼ) des Vierecks entlang der Achse P zugewiesen wird, und
- Einteilen des seismischen 3D-Blocks in Elementarzellen, wobei jede Zelle (Cᵢⱼₖ) auf einem Viereck (Bᵢⱼ) der Ebene (X, Y) zentriert ist und Abmessungen entlang den Achsen X und Y aufweist, die jeweils denjenigen des Vierecks entsprechen, auf welchem die Zelle zentriert ist, und eine Dicke entlang der Achse P aufweist, die einem Einteilungsschritt entlang der Achse P der dem Viereck zugeordneten zentralen Spur entspricht, derart daß jede Elementarzelle eine Probe bzw. einen Abschnitt (k) einer durch ihre Koordinaten (X, Y, P) definierten seismischen Zentralspur in dem seismischen Block einschließt, wobei die Koordinaten die Koordinaten der die Probe bzw. den Abschnitt beinhaltenden Elementarzelle darstellen,
und das des weiteren durch die folgenden Schritte gekennzeichnet ist:
- für jede Elementarzelle (Cᵢⱼₖ) des seismischen Blocks, Berechnen der Energie dieser Zelle ausgehend von der Amplitude der von der Zelle eingeschlossenen Probe der seismischen Spur, wobei die Energie proportional zum Quadrat dieser Amplitude ist,
- Festlegen einer Energieschwelle, oberhalb derer die Anwesenheit abnormaler Bereiche als wahrscheinlich gilt,
- Auswählen der Zellen des Blocks, die eine Energie aufweisen, die gleich oder größer der Schwelle ist,
- Zuordnen eines Codes zu den ausgewählten Zellen, derart, daß alle Zellen, die einem gleichen Ensemble ausgewählter aneinandergrenzenden Zellen angehören, den gleichen Code aufweisen, und daß die ausgewählten Zellen, die unterschiedlichen Ensembles ausgewählter aneinandergrenzender Zellen zugehören, unterschiedliche Codes aufweisen, wobei jedes Ensemble ausgewählter aneinandergrenzender Zellen einen abnormalen Bereich darstellt,
- Speichern der Position (X, Y, P) und des Codes jeder gewählten Zelle, und
- Durchführen einer Projektion XY des Blocks der mit Codes versehenen Zellen, wobei jeder abnormale Bereich in dieser Projektion mit einem unterschiedlichen Code erscheint, wodurch eine Karte übereinandergelagerter abnormaler Bereiche erhalten wird.

2. Verfahren nach Anspruch 1, **dadurch gekennzeichnet, daß** es des weiteren das Durchführen einer Projektion XP oder einer Projektion YP des Blocks der mit Codes versehenen Zellen umfaßt, derart daß die kumulierte Dicke der abnormalen Bereiche entlang der Achse X oder entlang der Achse Y erscheint, um die Höhen zu bestimmen, bei denen sich die abnormalen Bereiche befinden.

3. Verfahren nach einem der Ansprüche 1 oder 2, **dadurch gekennzeichnet, daß** die den Elementarzellen zugewiesenen Codes aus unterschiedlichen, jedem abnormalen Bereich zugeordneten Farben bestehen.

4. Verfahren nach einem der Ansprüche 1 bis 3, **dadurch gekennzeichnet, daß** es darin besteht, die Energieschwelle in Funktion des Risikogrades zu variieren, den man sich für die Durchführung der Kartographie setzt.
